**Europäisches Patentamt**

**European Patent Office**

**Office européen des brevets**

(19)

(11) Veröffentlichungsnummer : **0 385 294 B1**

(12)

# EUROPÄISCHE PATENTSCHRIFT

(45) Veröffentlichungstag der Patentschrift :
**15.04.92 Patentblatt 92/16**

(51) Int. Cl.$^5$ : **F02C 7/04,** F04D 29/54,
F04D 29/44, B64D 33/02

(21) Anmeldenummer : **90103539.4**

(22) Anmeldetag : **23.02.90**

(54) **Turbostrahltriebwerk.**

(30) Priorität : **03.03.89 DE 3906765**

(43) Veröffentlichungstag der Anmeldung :
**05.09.90 Patentblatt 90/36**

(45) Bekanntmachung des Hinweises auf die
Patenterteilung :
**15.04.92 Patentblatt 92/16**

(84) Benannte Vertragsstaaten :
**DE FR GB IT**

(56) Entgegenhaltungen :
**DE-A- 1 816 064
GB-A- 805 003
US-A- 2 841 346**

(56) Entgegenhaltungen :
**SOVIET INVENTIONS ILLUSTRATED,Section
P/Q,week 8916, 31 Mai 1989, Derwent Publications Ltd., london GB.\*Klasse Q, no
89-121095/16**

(73) Patentinhaber : **BMW ROLLS-ROYCE GmbH
Hohemarkstrasse 60-70
W-6370 Oberursel (DE)**

(72) Erfinder : **Fricke, Hans, Dipl.-Ing.
Starenweg 6
W-6370 Oberursel (DE)**

(74) Vertreter : **Bücken, Helmut
Bayerische Motoren Werke
Aktiengesellschaft Postfach 40 02 40
Petuelring 130 - AJ-30
W-8000 München 40 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Turbostrahltriebwerk für einen Flugkörper mit zwei gegenüberliegend angeordneten Lufteinlaufkanälen, die in einem Ausgleichsraum münden, in dem ein eine umlaufende Einlauflippe aufweisender, ringförmiger Verdichtereinlauf, der eine radiale, kreisringförmige Eintrittsfläche aufweist, für einen Verdichter angeordnet ist. Aus DE-A-1816064 ist eine Hilfsgasturbine bekannt, deren zwei Lufteinlaufkanäle seitlich und gegenüberliegend angeordnet sind. G.B-A-805003 offenbart einen Verdichtereinlaß mit in die Umfangsrichtung variierender Luffdurchtrittsbreite.

Bei Turbostrahltriebwerken mit zwei gegenüberliegend angeordneten, seitlichen Lufteinläufen ist es problematisch, die eintretenden Luftströme so zu vergleichmäßigen, daß in der Verdichtereintrittsebene keine starken Unterschiede im Strömungsfeld auftreten und insbesondere der Gesamtdruck, der statische Druck und der Winkel der Strömung gegenüber der Triebwerksachse über der gesamten Verdichtereintrittsebene nur in geringem Maße von einem vorgegebenen Wert abweichen.

Dieses Problem kann im wesentlichen dadurch beseitigt werden, daß ein sogenannter Beruhigungskessel vor der Verdichtereintrittsebene angeordnet wird. Jedoch steht nicht immer der Platz für einen derartigen Kessel zur Verfügung, in welchem Falle die Störungen in den Luftströmungen zu erheblichen zusätzlichen Verlusten im Verdichter führen, die so weit gehen können, daß der Verdichter in seinen instabilen Betriebsbereich, das sogenannte "Pumpen", gerät.

Besonders wenig Platz steht in Flugkörpern zur Verfügung, deren Länge und Durchmesser sowohl vom Startverfahren von einem fahrbaren Gerät aus wie auch durch den Transport unter einem Flugzeug in ihren Absolutwerten begrenzt sind. Erschwerend kommt hinzu, daß die Einläufe für die Luft des Turbostrahltriebwerks bei Flugkörpern meist sehr weit hinten liegen, d.h. in einem Bereich, in dem die Grenzschichtdicke am Rumpf bereits stark angewachsen ist. Außerdem strömen beim Kurvenflug unterschiedliche Luftmengen durch die Lufteinlaufkanäle.

Die für den Betrieb eines Turbostrahltriebwerks benötigten Hilfsgeräte wie Regler, Kraftstoff- und Ölpumpen, Elektrogenerator u.dgl. können aus Platzmangel nicht seitlich vom Triebwerk angeordnet werden, sondern sind in dem Raum vor dem Triebwerk anzuordnen, wodurch sich eine zusätzliche Behinderung für mögliche konstruktive Maßnahmen zum Ausgleich der Strömung ergibt.

Aufgabe der Erfindung ist es, ein Turbostrahltriebwerk der eingangs genannten Art zu schaffen, daß mit möglichst geringem Aufwand und möglichst geringem Platzbedarf ein im wesentlichen gleichmäßiges Strömungsfeld in der Verdichtereintrittsebene gewährleistet.

Diese Aufgabe wird dadurch gelöst, daß sich der Verlauf der Einlauflippe in Umfangsrichtung zwischen der Position in der Axialebene der Lufteinlaufkanäle und der Position in der hierzu um 90° versetzten Axialebene kontinuierlich von einer minimalen zu einer maximalen Durchtrittsbreite derart ändert, daß sich im wesentlichen eine gleichmäßige Massenverteilung der einströmenden Luft über den Umfang des Verdichtereinlaufs ergibt.

Hierdurch wird nur eine modifizierte Formgebung der Einlauflippe des Verdichtereinlaufs benötigt, so daß die zu treffenden konstruktiven Maßnahmen äußerst gering sind und im wesentlichen kein zusätzlicher Platz benötigt wird.

Weitere Ausgestaltungen der Erfindung ergeben sich aus der nachfolgenden Beschreibung und den Unteransprüchen.

Die Erfindung wird nachstehend anhand eines in den beigefügten Abbildungen dargestellten Ausführungsbeispiels näher erläutert.

Fig. 1 zeigt schematisiert und ausschnittweise im waagerechten Schnitt einen Flugkörper mit einem Turbostrahltriebwerk.

Fig. 2 zeigt schematisiert zwei um 90° versetzte Schnitte des Verdichtereinlaufbereichs des Turbostrahltriebwerks von Fig. 1.

Fig. 3 zeigt eine Abwicklung des Verlaufs der Durchtrittsbreite des Verdichtereinlaufbereichs von Fig. 2, wobei die Lufteintrittskanäle bei 90° und 270° münden.

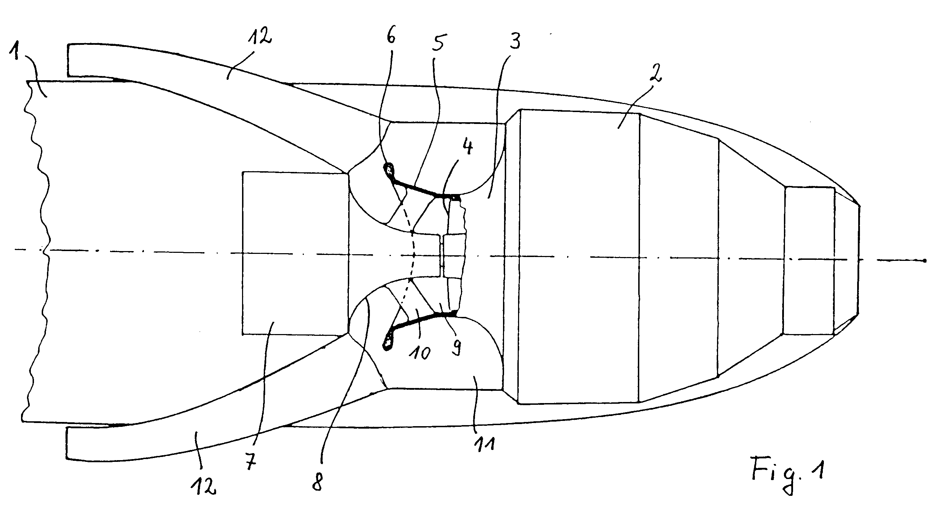

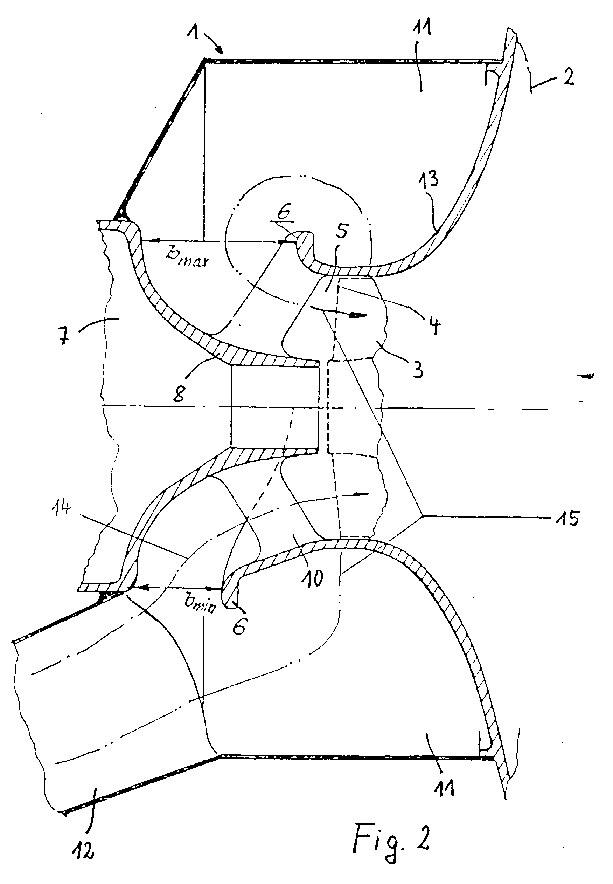

Fig. 1 und 2 zeigen einen Flugkörper 1, der mit einem rückwärtigen Triebwerk 2 versehen ist, das einen Verdichter 3 mit einer Verdichtereintrittsebene 4 und einem ringförmigen verdichtereinlauf 5 aufweist. Der Verdichtereinlauf 5 besitzt eine umlaufende Einlauflippe 6. Hilfsgeräte sind in einem Raum 7 untergebracht, der über einen etwa hyperboloidförmigen Fortsatz 8 mit dem Triebwerk 2 verbunden ist.

Der Fortsatz 8 und der Verdichtereinlauf 5 begrenzen einen ringförmigen Kanal 9, in dem einlaufseitig in Axialebenen des Triebwerks 2 verlaufende Gleichrichterschaufeln 10 angeordnet sind, die dazu dienen, den Drall der zum Verdichter 3 strömenden Luft, d.h. die in Umfangsrichtung gerichtete Geschwindigkeitskomponente weitgehend zu eliminieren. Die Einlauflippe 6 bildet zusammen mit dem Fortsatz 8 eine konzentrisch zur Achse des Triebwerks 2 umlaufende, kreisringförmige Eintrittsfläche für den Verdichtereinlauf 5.

Der Verdichtereinlauf 5 ist in einem Ausgleichsraum 11 angeordnet, in den zwei in einer Axialebene angeordnete Lufteinlaufkanäle 12 münden, die beispielsweise back- und steuerbordseitig zum Flugkörper 1 angeordnet sind.

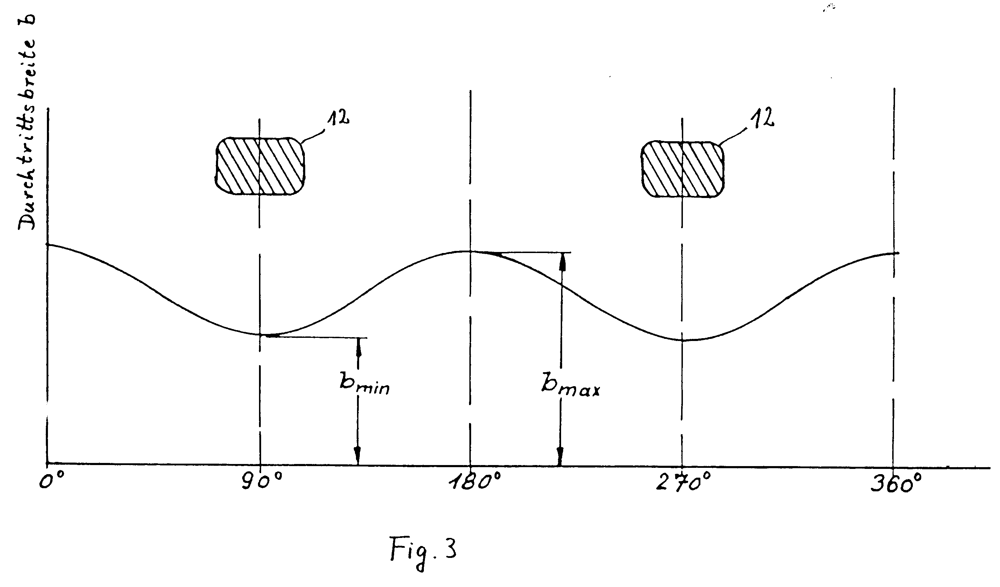

Wie sich aus Fig. 2 und 3 ergibt, ist der axiale Verlauf der Einlauflippe 6 zwischen der Position in der Axialebene der Lufteinlaufkanäle 12 und der Position in der hierzu um 90° versetzten Axialebene kontinuierlich von einer minimalen Durchtrittsbreite $b_{min}$ zu einer maximalen Durchtrittsbreite $b_{max}$ etwa entsprechend einer Sinuskurve veränderlich ausgebildet. Die Einlauflippe 6 steht radial nach außen vor, während die den Verdichtereinlauf 5 begrenzende Wandung 13 hyperboloidartig zum Triebwerk 2 auskragt und den Ausgleichsraum 11 zum Triebwerk 2 hin begrenzt.

Der die Lufteinlaufkanäle 12 verlassende Luftstrom wird in zwei Anteile aufgeteilt, ein Anteil strömt unmittelbar an den Gleichrichterschaufeln 10 vorbei in den Verdichter 3, der größere Anteil der Luft wird jedoch zunächst in den Ausgleichsraum 11 geleitet unter gleichzeitiger starker Verringerung seiner Geschwindigkeit. Diese Luft wird dann um etwa 90° umgelenkt und strömt innerhalb des Ausgleichsraums 11 in Umfangsrichtung in die Bereiche, die nicht unmittelbar gegenüber dem Auslaß der Lufteinlaufkanäle 12 liegen. Um das problemlose Umströmen der Einlauflippe 6 zu ermöglichen, ist diese mit einem entsprechend großen Radius versehen.

Der beschriebene, in Umfangsrichtung sich ändernde Verlauf der Einlauflippe 6 dient zur möglichst gleichmäßigen Aufteilung der beiden Massenanteile der aus den beiden Lufteinlaßkanälen 12 stammenden Luftströme. Hier durch ist der Weg, den ein jedes Luftteilchen vom Austritt aus dem Lufteinlaufkanal 12 zur Eintrittsebene 4 des Verdichters 3 zurücklegen muß, abhängig von dem Ort am Umfang in der verdichtereintrittsebene 4, in den das Luftteilchen einströmt. Unterschiedlich lange Laufwege haben aber auch unterschiedliche Verluste zur Folge. Über den kurzen Weg 14 mit geringen Verlusten wird eine größere Menge pro Flächeneinheit strömen als über den längeren Weg 15 mit höheren Verlusten. Dies wird jedoch kompensiert, indem auf dem kurzen Weg 14 der Verlust an Druckenergie dadurch erhöht wird, daß die Durchtrittsbreite $b_{min}$ entsprechend klein ist, während auf dem langen Weg 15, der über den Ausgleichsraum 11 bis zu einer um 90° in Umfangsrichtung versetzten Stelle in die Verdichtereintrittsebene 4 führt, der Verlust an Strömungsenergie dadurch verringert wird, daß die Durchtrittsbreite groß entsprechend $b_{max}$ ist.

Das Verhältnis zwischen den Durchtrittsbreiten $b_{min}$ und $b_{max}$ liegt zweckmäßigerweise im Bereich von 1:1,5 bis 1:4, insbesondere wenn das Verhältnis von kürzestem Weg 14 zu längstem Weg 15 etwa 1:2 beträgt.

**Patentansprüche**

1. Turbostrahltriebwerk für einen Flugkörper (1) mit zwei gegenüberliegend angeordneten Lufteinlaufkanälen (12), die in einem Ausgleichsraum (11) münden, in dem ein eine umlaufende Einlauflippe (6) aufweisender, ringförmiger Verdichtereinlauf (5), der eine radiale, kreisringförmige Eintrittsfläche aufweist, für einen Verdichter (3) angeordnet ist, dadurch **gekennzeichnet,** daß sich der Verlauf der Einlauflippe (6) in Umfangsrichtung zwischen der Position in der Axialebene der Lufteinlaufkanäle (12) und der Position in der hierzu um 90° versetzten Axialebene kontinuierlich von einer minimalen Durchtrittsbreite ($b_{min}$) zu einer maximalen Durchtrittsbreite ($b_{max}$) derart ändert, daß sich im wesentlichen eine gleiche Massenverteilung der einströmenden Luft über den Umfang des Verdichtereinlaufs (5) ergibt.

2. Turbostrahltriebwerk nach Anspruch 1, dadurch gekennzeichnet, daß der Verlauf der Einlauflippe (6) in Umfangsrichtung im wesentlichen sinusförmig ist.

3. Turbostrahltriebwerk nach Anspruch 1 oder 2, dadurch gekennzeichnet, daß das Verhältnis zwischen den Durchtrittsbreiten ($b_{min}$ und $b_{max}$) etwa im Bereich von 1:1,5 bis 1:4 liegt.

4. Turbostrahltriebwerk nach einem der Ansprüche 1 bis 3, dadurch gekennzeichnet, daß in dem ringförmigen Einlauf (5) in Axialebenen angeordnete Gleichrichterschaufeln (10) angebracht sind.

**Claims**

1. A turbojet engine for a missile (1) comprising two oppositely-disposed air inlet ducts (12) which open into an equalising chamber (11) containing an annular inlet (5) for a compressor (3), the inlet having a peripheral lip (6) and a radial annular entry surface, characterised in that the curve of the inlet lip (6), in the peripheral direction between the position in the axial plane of the air inlet ducts (12) and the position in the axial plane at 90° thereto, varies continuously from a minimum passage width ($b_{min}$) to a maximum passage width ($b_{max}$), so that the mass distribution of inflowing air is substantially uniform over the periphery of the compressor inlet (5).

2. A turbojet engine according to claim 1, characterised in that the curve of the inlet lip (6) in the peripheral direction is substantially sinusoidal.

3. A turbojet engine according to claim 1 or 2, characterised in that the ratio between the passage widths ($b_{min}$ and $b_{max}$) is approximately in the range from 1: 1.5 to 1 : 4.

4. A turbojet engine according to any of claims 1 to 3, characterised in that rectifying blades (10) are disposed in axial planes in the annular inlet (5).

**Revendications**

1. Turboréacteur pour un aéronef (1) avec deux canaux d'entrée d'air (12) se faisant vis-à-vis, qui débouchent dans une chambre de compensation (11), dans laquelle est disposée pour un compresseur (3) une entrée de compresseur (5) présentant une lèvre d'entrée (6) faisant le tour, de forme annulaire, qui présente une surface d'entrée radiale, de forme circulaire annulaire, turboréacteur caractérisé en ce que le développement de la lèvre d'entrée (6) se modifie continuellement en direction périphérique entre la position dans le plan axial des canaux d'entrée d'air (12) et la position dans le plan axial décalé de 90° depuis une largeur de passage minimale ($b_{min}$) jusqu'à une largeur de passage maximale ($b_{max}$) de telle façon que l'on obtienne essentiellement une répartition égale de l'air entrant sur la périphérie de l'entrée du compresseur (5).

2. Turboréacteur selon la revendication 1, caractérisé en ce que le développement de la lèvre d'entrée (6) en direction périphérique a une forme essentiellement sinusoïdale.

3. Turboréacteur selon la revendication 1 ou 2, caractérisé en ce que le rapport entre les largeurs de passage ($b_{min}$ et $b_{max}$) se trouve environ dans la zone de 1:1,5 à 1:4.

4. Turboréacteur selon l'une des revendications 1 à 3, caractérisé en ce que dans l'entrée (5) de forme annulaire sont disposées des aubes de redressement (10) situées dans des plans axiaux.

Fig. 1

EP 0 385 294 B1

Fig. 2

Fig. 3

EP 0 385 294 B1